# EUROPÄISCHE PATENTANMELDUNG

(11) **EP 2 018 997 A2**
(43) Veröffentlichungstag der Anmeldung: **28.01.2009**
(21) Anmeldenummer: 08013366.3
(22) Anmeldetag: 24.07.2008
(51) Int. Cl.: B60R 13/10

(54) **Schild, insbesondere Kraftfahrzeugkennzeichenschild**

(30) Priorität: 24.07.2007 DE 102007034374
(71) Anmelder: Truck-Lite Europe GmbH, 99817 Eisenach (DE)
(72) Erfinder: Gotthardt, Frank, Dr., 37077 Göttingen (DE)
(74) Vertreter: Strasser, Wolfgang

(57) **Zusammenfassung**

Ein Herstellungsverfahren für ein selbst leuchtendes Schild (1), das die Schritte umfasst:
a) Bereitstellen eines ebenen, plastisch verformbaren Trägers (2),
b) Aufbringen einer einen Elektrolumineszenz-Flachkondensator (14) bildenden Schichtenfolge innerhalb eines Leuchtbereichs und
c) Prägen einer den Elektrolumineszenz-Flachkondensator umgebenden Sicke (8) in einem Randbereich, so, dass die Sicke konvex über die den Leuchtbereich tragende Seite des Trägers hinaus vorsteht,
ist durch folgende weitere Schritte gekennzeichnet:
e) zwischen den Schritten a) und b) erfolgendes Aufbringen einer ersten Lage (18) aus einer feuchtigkeitsundurchlässigen Folie, die den Leuchtbereich und den Bereich des Trägers überdeckt, in welchem die Sicke ausgebildet wird,
f) zwischen den Schritten b) und c) erfolgendes Aufbringen einer zweiten Lage (26) aus einer feuchtigkeitsundurchlässigen, transparenten Folie, die den Leuchtbereich und den Bereich des Trägers überdeckt, in welchem die Sicke ausgebildet wird, und
g) gleichzeitig mit dem Prägen der Sicke erfolgendes, feuchtigkeitsdichtes Verbinden der beiden Lagen (18, 26) aus feuchtigkeitsundurchlässigen Folien im Sickenbereich.

## Beschreibung

Die Erfindung betrifft ein Verfahren zur Herstellung eines selbst leuchtenden Schildes, insbesondere eines selbstleuchtenden Kraftfahrzeug-Kennzeichenschildes der im Oberbegriff von Anspruch 1 genannten Art, wie es beispielsweise der DE 102 38 054 A1 entnehmbar ist, sowie ein nach diesem Verfahren hergestelltes selbstleuchtendes Schild.

Zwar wird in dieser Druckschrift auf das prinzipielle Erfordernis hingewiesen, den wenigstens einen, auf der dem Betrachter zugewandten Hauptfläche aufgebrachten Elektrolumineszenz-Flachkondensator gegen das Eindringen von Feuchtigkeit zu schützen. Dies soll dadurch bewerkstelligt werden, dass die gesamte Anordnung durch eine transparente Kunststofffolie abgedeckt wird, die mit dem Träger an dessen Außenrändern feuchtigkeitsdicht verbunden ist und die retroreflektierende Bestandteile enthalten kann

In der Praxis zeigt sich jedoch, dass der hierdurch erzielbare Feuchtigkeitsschutz bei sehr harten Einsatzbedingungen, wie sie insbesondere bei selbst leuchtenden Kraftfahrzeug-Kennzeichenschildern auftreten, nicht ausreichend ist.

Somit liegt der Erfindung die Aufgabe zugrunde, ein Herstellungsverfahren der oben genannten art zu schaffen, das zu selbstleuchtenden Schildern, insbesondere selbstleuchtenden Kraftfahrzeugschildern führt, die auch bei extrem harten Einsatzbedingungen eine auf verbesserten Feuchtigkeitsschutz besitzen und daher eine hohe Zuverlässigkeit und lange Betriebslebensdauer aufweisen

Zur Lösung dieser Aufgabe sieht die Erfindung die im Anspruch 1 niedergelegten Merkmale vor.

Durch das erfindungsgemäße Verfahren wird der feuchtigkeitsempfindliche Elektrolumineszenz-Flachkondensator gleichsam in eine rundum feuchtigkeitsdicht versiegelte Folientasche eingeschlossen, die sich überdies in ihrem verschweißten Randbereich über die den Elektrolumineszenz-Flachkondensator wallartig umgebende Sicke hinweg erstreckt, welche der gesamten Anordnung eine ausgezeichnete mechanische Festigkeit verleiht und eine Art Trog bildet, in dem der Elektrolumineszenz-Flachkondensator aufgenommen ist.

Besonders vorteilhaft gestaltetet sich das erfindungsgemäße Verfahren dadurch, dass die feuchtigkeitsdichte Verbindung, vorzugsweise Verschweißung der beiden feuchtigkeitsundurchlässigen Folien in dem gleichen Arbeitsschritt durchgeführt wird, in dem das Prägen der Sicke erfolgt. Somit ist kein zusätzlicher Zeit- und Kostenaufwand erforderlich.

Weitere vorteilhafte Ausgestaltungen des erfindungsgemäßen Verfahrens sind in den Unteransprüchen niedergelegt.

Die Erfindung wird im Folgenden an Hand eines Ausführungsbeispiels unter Bezugnahme auf die Zeichnung beschrieben; in dieser zeigen:
- Fig. 1: eine Draufsicht auf ein mit Hilfe des erfindungsgemäßen Verfahrens hergestelltes Kraftfahrzeug-Kennzeichenschild,
- Fig. 2: in stark vergrößertem Maßstab einen schematischen Schnitt durch das Kraftfahrzeug-Kennzeichenschild aus Fig. 1 längs der Linie II-II und
- Fig. 3: in stark schematisierter Weise eine auseinander gezogene Schnittdarstellung der verschiedenen, nach Baugruppen zusammengefassten Schichten eines mit Hilfe des erfindungsgemäßen Verfahrens herstellbaren Kraftfahrzeug-Kennzeichenschildes.

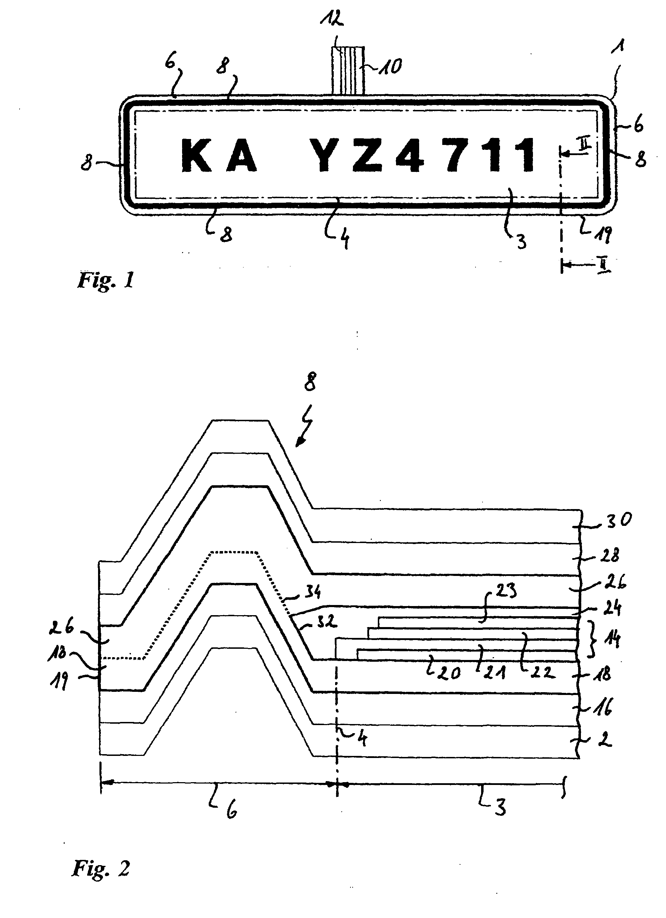

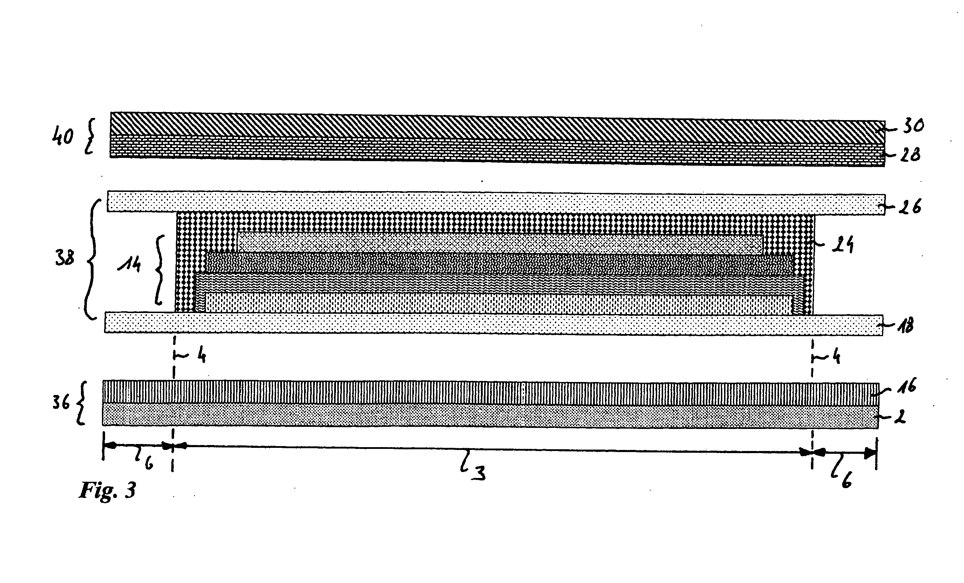

Es sei ausdrücklich darauf hingewiesen, dass in den beiden Schnittdarstellungen der Fig. 2 und 3 die Dimensionen, insbesondere die Dicken der einzelnen Schichten nicht maßstabsgetreu sondern der Deutlichkeit halber teilweise stark vergrößert wiedergegeben sind.

Das in Fig. 1 dargestellte Kraftfahrzeug-Kennzeichenschild 1, das einen plastisch verformbaren, vorzugsweise aus Aluminium bestehenden Träger 2 umfasst, weist auf seiner dem Betrachter zugewandten Hauptfläche einen Leuchtbereich 3 auf, dessen Ränder durch die strichpunktierte Linie 4 angedeutet sind.

Der Leuchtbereich 3 ist von einem im Betrieb nicht leuchtenden Randbereich 6 umgeben, in welchem bei dem fertig gestellten Schild eine den Leuchtbereich 3 vollständig umschließende Sicke 8 ausgebildet ist, die konvex über die dem Betrachter zugewandte Hauptfläche des Trägers 2 vorsteht.

Weiterhin ist in Fig. 1 schematisch eine Anschlussfahne 10 dargestellt, die beispielsweise von einer flexiblen, gedruckten Schaltung gebildet werden kann, und auf der sich Leitbahnen 12 befinden, die zur Strom/Spannungsversorgung eines den Leuchtbereich 3 bedeckenden Elektrolumineszenz-Flachkondensators 14 dienen, dessen Schichtaufbau in den Fig. 2 und 3 wiedergegeben ist.

Im Schnitt der Fig. 2 sind ein Teil des Leuchtbereichs 3 und der von diesem durch die Begrenzungslinie 4 getrennte Randbereich 6 zu sehen. Weiterhin erkennt man, dass im Randbereich 6 eine Sicke 8 ausgebildet ist, die nach oben, das heißt über die den Elektrolumineszenz-Schichtaufbau tragende Hauptfläche des Trägers 2 konvex vorsteht. Auf dem Träger 2 befindet sich eine Kleberschicht 16, die dazu dient, die nachfolgende Lage 18, die von einer feuchtigkeitsundurchlässigen Folie gebildet wird, mit dem Träger 2 zu verbinden. Wie man sieht, erstrecken sich sowohl die Kleberschicht 18 als auch die Lage 18 bis zu der in Fig. 2 links außen liegenden Kante 19 des Trägers 2.

Über der Lage 18 ist der Elektrolumineszenz-Flachkondensator 14 angeordnet, der aus einer Basis- beziehungsweise Rückelektrode 20, einer diese vollständig überdeckenden Isolationsschicht 21, einer im Betrieb leuchtenden Pigment- beziehungsweise Elektrolumineszenz-Schicht 22 und einer transparenten Deck- beziehungsweise Frontelektrode 23 besteht. Die Rückelektrode 20 und die Frontelektrode 23 sind in nicht dargestellter Weise mit den Leitbahnen 12 auf der Anschlussfahne 10 elektrisch leitend verbunden.

Der Fig. 2 ist zu entnehmen, dass sich der Elektrolumineszenz-Flachkondensator 14 in Richtung des Randbereichs 6 nur bis zur Linie 4 erstreckt, das heißt nicht in den Randbereich 6 hinein, in welchem die Sicke 8 ausgebildet ist.

Der Elektrolumineszenz-Flachkondensator 14 ist von einer weiteren Kleberschicht 24 überdeckt, die dazu dient, die darüber angeordnete Lage 26, die von einer transparenten, feuchtigkeitsundurchlässigen Folie gebildet wird, mit den darunter liegenden Schichten zu verbinden. Auch die Kleberschicht 24 erstreckt sich nur geringfügig über die Linie 4 hinaus, so dass sie an der dem Elektrolumineszenz-Flachkondensator 14 zugewandten Flanke 32 der Sicke 8 endet.

Demgegenüber erstreckt sich die Lage 26 wieder bis zur äußersten, in Fig. 2 linken Kante 19 des Trägers 2. Dadurch berührt sie im Bereich der Sicke 8 die unter dem Elektrolumineszenz-Flachkondensator 14 hervorstehende Lage 18, mit der sie während des Prägevorgangs der Sicke 8 in feuchtigkeitsdichter Weise verschweißt worden ist, wie durch die punktierte Linie 34 angedeutet wird. Dadurch, dass diese feuchtigkeitsdichte Verbindung der beiden Lagen 18 und 26 während des Prägevorgangs der Sicke 8 um den gesamten Umfang des Leuchtbereichs 3 herum erfolgt, wird um den in diesem Leuchtbereich 3 befindlichen Elektrolumineszenz-Flachkondensator 14 eine völlig feuchtigkeitsdichte Tasche gebildet, die ihn auch im länger währenden Betrieb und bei harten Einsatzbedingungen gegen eindringende Feuchtigkeit schützt.

Vorzugsweise bestehen die beiden Lagen 18, 26 aus der gleichen feuchtigkeitsdichten Folie, beispielsweise der Novoflon^{®}-Folie von Honeywell, die sehr gute Feuchtigkeitssperreigenschaften besitzt. Alternativ können die Lagen 18, 26 aber auch von zwei verschiedenen Folien gebildet sein, wenn diese feuchtigkeitsdicht miteinander verbunden, insbesondere verschweißt werden können. In diesem Fall muss dann nur die Folie, welche die obere Lage 26 bildet, für das vom Elektrolumineszenz-Flachkondensator 14 abgegebene Licht transparent sein.

Oberhalb der Lage 26 befindet sich eine weitere Kleberschicht 28, die dazu dient, die ganz oben liegende, reflektierende Folie 30 mit dem darunter liegenden Schichtaufbau zu verbinden. Sowohl die Kleberschicht 28 als auch die reflektierende Folie 30 können sich bis zur äußersten Kante 19 des Trägers 2 erstrecken. Es wäre aber auch möglich, sie innerhalb der Sicke 8, das heißt also etwa im Bereich der Linie 4 enden zu lassen.

In Fig. 3 sind in schematischer Weise drei Baugruppen 36, 38, 40 dargestellt, aus denen nach dem erfindungsgemäßen Verfahren ein selbst leuchtendes Schild, insbesondere ein selbst leuchtendes Kraftfahrzeug-Kennzeichenschild aufgebaut werden kann. Die untere Baugruppe 36 umfasst den aus Aluminium oder einem anderen plastisch verformbaren Material bestehenden Träger 2 und die auf diesen ganzflächig aufgebrachte Kleberschicht 16.

Die mittlere Baugruppe 38 umfasst die sich ebenfalls über die gesamte Fläche des Trägers 2 erstreckende, untere Lage 18 aus einer feuchtigkeitsundurchlässigen Folie, über welcher der vollständig in eine Kleberschicht 24 eingebettete Elektrolumineszenz-Flachkondensator 14 angeordnet ist, der sich ebenso wie diese Kleberschicht 24 in horizontaler Richtung nur über den Bereich des Trägers 2 erstreckt, der dem Leuchtbereich 3 des fertig gestellten Schildes 1 entspricht, und somit an der Randlinie 4 endet und den ihn vollständig umgebenden Bereich freilässt, der dem Randbereich 6 des fertig gestellten Schildes 1 entspricht.

Die auf der Oberseite der Kleberschicht 24 angeordnete, obere Lage 26 steht demgegenüber wieder bis zu den Außenkanten des Trägers 2 vor, überdeckt also insbesondere auch den Randbereich 6.

Nach dem erfindungsgemäßen Verfahren kann zur Herstellung eines selbst leuchtenden Schildes beispielsweise so vorgegangen werden, dass zunächst auf den plastisch verformbaren Träger 2 die Klebstoffschicht 16 und auf diese die Lage 18 aufgebracht wird, auf deren Oberseite zuvor beispielsweise unter Verwendung eines oder mehrer bekannter Beschichtungsverfahren (z.B. Spritzen, Siebdruck, Dickschichtverfahren usw.) die Schichtenfolge des Elektrolumineszenz-Flachkondensators 14 aufgebracht und mit der Klebstoffschicht 24 überdeckt worden ist, die zur Fixierung der darüber liegenden Lage 26 dient. Auf diese wird dann mithilfe der Kleberschicht 28 die reflektierende Folie 30 aufgebracht, bei der des sich vorzugsweise um eine retroreflektierende Folie handelt. Der Rückstrahlwert dieser retroreflektierenden Folie 30 kann entweder durch Rasterung oder dadurch eingestellt werden, dass die an ihrer Rückseite vorgesehenen, prismatischen Strukturen (nicht dargestellt) mit einer wählbaren Tiefe in die Kleberschicht 28 eintauchen, wie dies aus der DE 102 55 377 A1 bekannt ist.

Der so fertig gestellte Schichtaufbau wird heiß laminiert um die einzelnen Schichten unlösbar miteinander zu verbinden. Zum Abschluss erfolgt dann das Prägen der Sicke im Randbereich 6, durch welches insbesondere die Lagen 18 und 26 feuchtigkeitsdicht miteinander verschweißt werden, so dass um den Elektrolumineszenz-Flachkondensator 14 herum eine feuchtigkeitsdichte Tasche gebildet wird. Dadurch, dass die Lagen 18, 26 über die Sicke 8 hinweg bis an den Rand des Trägers 2 herausgeführt sind, wird die seitliche Diffusionsstrecke für Wasserdampf und Sauerstoff in den Schichtaufbau hinein erheblich verlängert.

Die eben geschilderte Reihenfolge der Verfahrensschritte muss nicht notwendigerweise eingehalten werden, um das erfindungsgemäße Verfahren auszuführen. Entscheidend ist lediglich, dass die beiden, den Elektrolumineszenz-Flachkondensator 14 unten und oben umschließenden, feuchtigkeitsundurchlässigen Lagen 18, 26 so weit in den Randbereich 6 vorstehen, dass sie beim Prägen der Sicke 8 in diesem Randbereich miteinander dauerhaft und feuchtigkeitsundurchlässig verbunden, vorzugsweise verschweißt werden können.

Erfindungsgemäß ist es auch möglich, auf ein und demselben Träger mehrere voneinander getrennte, insbesondere voneinander getrennt ansteuerbare Leuchtbereiche vorzusehen, die entweder gemeinsam von einem einzigen, mit einer Sicke versehenen Randbereich umschlossen sind, oder von denen jeder mit einem eigenen Randbereich und einer eigenen, in umgebenden Sicke ausgestattet ist. Die feuchtigkeitsundurchlässigen Lagen können dann zwei oder mehreren Leuchtbereichen gemeinsam oder für wenigstens zwei Leuchtbereiche voneinander getrennt sein.

## Patentansprüche

1. Verfahren zur Herstellung eines selbst leuchtenden Schildes (1), insbesondere Kraftfahrzeug-Kennzeichenschildes, das wenigstens einen Leuchtbereich (3) und einen diesen wenigstens einen Leuchtbereich (3) umgebenden Randbereich (6) aufweist, wobei das Verfahren folgende Schritte umfasst:
a) Bereitstellen eines ebenen Trägers (2) aus einem plastisch verformbaren Material,
b) Aufbringen einer einen Elektrolumineszenz-Flachkondensator (14) bildenden Schichtenfolge innerhalb des Bereiches des Trägers (2), der dem wenigstens einen Leuchtbereich (3) des fertig gestellten Schildes (1) entspricht **dadurch gekennzeichnet, dass** das Verfahren weiterhin folgende Schritte umfasst
c) Prägen einer den wenigstens einen Elektrolumineszenz-Flachkondensator (14) vollständig ungebenden Sicke (8) in dem Bereich des Trägers (2), der dem Randbereich (6) des fertig gestellten Schildes (1) entspricht, so dass die Sicke (8) über die den wenigstens einen Leuchtbereich (3) tragende Seite des Trägers (2) hinaus konvex vorsteht,
e) ein zwischen den Schritten a) und b) erfolgendes Aufbringen einer ersten Lage (18) aus einer feuchtigkeitsundurchlässigen Folie, die den Bereich des Trägers (2) überdeckt, der dem wenigstens einen Leuchtbereich (3) des fertig gestellten Schildes (1)entspricht, und die sich weiterhin zumindest über den Bereich des Trägers (2) erstreckt, in welchem gemäß Schritt c) die Sicke (8) ausgebildet wird,
f) ein zwischen den Schritten b) und c) erfolgendes Aufbringen einer zweiten Lage (26) aus einer feuchtigkeitsundurchlässigen, transparenten Folie, die den Bereich des Trägers (2) überdeckt, der dem wenigstens einen Leuchtbereich (3) des fertig gestellten Schildes (1)entspricht, und die sich weiterhin zumindest über den Bereich des Trägers (2) erstreckt, in welchem gemäß Schritt c) die Sicke (8) ausgebildet wird, und
g) gleichzeitig mit dem Prägen Sicke (8) erfolgendes, feuchtigkeitsdichtes Verbinden der beiden Lagen (18, 26) aus feuchtigkeitsundurchlässigen Folien im Sickenbereich zur Herstellung einer rundum feuchtigkeitsdichten Umhüllung des wenigstens einen Elektrolumineszenz-Flachkondensators (14).

2. Verfahren nach Anspruch 1, **dadurch gekennzeichnet, dass** das feuchtigkeitsdichte Verbinden der beiden Lagen (18, 26) aus feuchtigkeitsundurchlässigen Folien gemäß Schritt g) durch einen gleichzeitig mit dem Prägevorgang erfolgenden Schweißvorgang erfolgt.

3. Verfahren nach Anspruch 1 oder 2, **dadurch gekennzeichnet, dass** vor dem Schritt e) auf den Träger (2) eine als Haftschicht für die erste Lage (18)aus einer feuchtigkeitsundurchlässigen Folie dienende Kleberschicht (16) über den gesamten Bereich aufgebracht wird, der von dieser nachfolgend aufgebrachten Folie überdeckt werden soll.

4. Verfahren nach einem der vorhergehenden Ansprüche, **dadurch gekennzeichnet, dass** vor dem Schritt f) eine weitere Kleberschicht (24) aufgebracht wird, die den Bereich, der dem wenigstens einen Leuchtbereich (3) des fertig gestellten Schildes (1) entsprich, vollständig überdeckt, den diesen Leuchtbereich (3) umgebenden Randbereich (6) aber frei lässt.

5. Verfahren nach einem der vorhergehenden Ansprüche, **dadurch gekennzeichnet, dass** zwischen den Schritten f) und g) eine von außen her auffallendes Licht reflektierende Folie (30) zumindest über dem Bereich aufgebracht wird, der dem wenigstens einen Leuchtbereich (3) des fertig gestellten Schildes (1) entspricht.

6. Verfahren nach Anspruch 5, **dadurch gekennzeichnet, dass** die reflektierende Folie (30) die ganze Flachseite des Trägers(2) überdeckt.

7. Verfahren nach Anspruch 5 oder 6, **dadurch gekennzeichnet, dass** zwischen die reflektierende Folie (30) und der zweiten Lage (26) aus einer feuchtigkeitsundurchlässigen, transparenten Folie eine Kleberschicht (28) zur Verbindung dieser beiden Folien vorgesehen wird.

8. Verfahren nach einem der Ansprüche 5 bis 7, **dadurch gekennzeichnet, dass** die reflektierende Folie (30) höhere Rückstrahlwerte besitzt, als sie das fertig gestellte Schild (1) aufweisen soll, und dass die niedrigeren Rückstrahlwerte des fertig gestellten Schildes (1) durch eine Rasterung eingestellt werden.

9. Verfahren nach einem der Ansprüche 5 bis 7, **dadurch gekennzeichnet, dass** die reflektierende Folie (30) höhere Rückstrahlwerte besitzt, als sie das fertig gestellte Schild (1) aufweisen soll, und dass die niedrigeren Rückstrahlwerte des fertig gestellten Schildes (1)mit Hilfe der Schichtdicke der Kleberschicht eingestellt werden.

10. Verfahren nach einem der vorhergehenden Ansprüche, **dadurch gekennzeichnet, dass** die auf den Träger (2) aufgebrachten Schichten durch Heißlaminieren mit dem Träger (2) und miteinander verbunden werden.

11. Verfahren nach Anspruch 10, **dadurch gekennzeichnet, dass** das Heißlaminieren vor dem Schritt c) erfolgt.

12. Verfahren nach einem der vorhergehenden Ansprüche, **dadurch gekennzeichnet dass** der Träger (2) aus Aluminium besteht.

13. Verfahren nach einem der vorhergehenden Ansprüche, **dadurch gekennzeichnet dass** mehrere voneinander getrennte Leuchtbereiche ausgebildet werden.

14. Verfahren nach Anspruch 13, **dadurch gekennzeichnet, dass** wenigstens zwei der voneinander getrennten Leuchtbereiche von einem gemeinsamen Randbereich umgeben angeordnet werden, so dass sie nach dem Schritt c) von einer einzigen Sicke umgeben sind.

15. Verfahren nach einem der vorhergehenden Ansprüche, **dadurch gekennzeichnet dass** die beiden Lagen (18, 26) aus feuchtigkeitsundurchlässigen Folien aus dem gleichen Folienmaterial bestehen.

16. Selbst leuchtendes Schild (1), insbesondere Kraftfahrzeug-Kennzeichenschild, **dadurch gekennzeichnet dass** es nach einem Verfahren gemäß einem oder mehreren der vorhergehenden Ansprüche hergestellt ist.
